# EUROPEAN PATENT APPLICATION

(11) **EP 4 760 214 A1**
(43) Date of publication of application: **17.06.2026**
(21) Application number: 24220277.8
(22) Date of filing: 16.12.2024
(51) Int. Cl.: G01D 9/00, G01D 11/24, G06K 19/00

(54) **OXIDATION PROTECTION DEVICE FOR DATA LOGGERS**

(71) Applicant: Tecnosoft s.r.l., 20068 Peschiera Borromeo (MI) (IT)
(72) Inventor: ROSSI, Sergio, 20068 Peschiera Borromeo (MI) (IT); ARALDI, Lorenzo, 20068 Peschiera Borromeo (MI) (IT)
(74) Representative: Santarelli

(57) **Abstract**

The invention is related to an oxidation protection device (1) for a data logger (9) configured to protect said data logger (9) when in contact with an oxidizing fluid, said protection device comprising:
- an external casing composed of a base (10) and a cover (11) defining a hollow interior space (12), said cover (11) having a top wall (110) provided with an opening (111) so as to allow said oxidizing fluid to enter said hollow interior space (12) for said oxidizing fluid to enter the protection device (1) before reaching the data logger (9);
- catalytic means positioned within said hollow interior space (12) and comprising a catalytic chamber facing said top wall (110), said catalytic means being configured to catalyze an oxidation reaction of said oxidizing fluid arriving through said opening (111) and circulating within said catalytic chamber,
said catalytic means comprising a removable plate (2) in the form of a solid disc in which a labyrinth (20) is formed, said labyrinth being positioned into the hollow interior space (12) facing said top wall (110), said labyrinth (20) comprising an entry (21) allowing said oxidizing fluid arriving from said opening (111) to enter said labyrinth (20), and an exit orifice (22) provided at an exit of said labyrinth (20) to allow an oxidation reaction product and any remaining oxidizing fluid to exit from said labyrinth (20) towards an exit of said device at the entry of said data logger (9).

## Description

### Field of the invention

The present invention is in the field of datalogger devices, also called data logger devices or data loggers. More particularly, the present disclosure is related to the field of the protection devices for such data loggers configured to protect said data logger from exposure to oxidizing fluids commonly encountered in various environmental and industrial applications.

Such oxidation protection device together with data loggers can be used for example in sterilization process in the field of agriculture, pharmaceutical industry or food.

### Background of the invention

Classically, in known sterilization processes utilizing hydrogen peroxide (H₂O₂), the compound is subjected to radiofrequency to generate plasma with sterilizing properties. These processes typically involve creating a vacuum and injecting hydrogen peroxide into the sterilization chamber. Accurate monitoring of the vacuum level is crucial to ensure the effectiveness of sterilization and is often performed using data loggers equipped with vacuum sensors.

A conventional data logger, also called datalogger or data recorder, is an electronic device that records data over time or about location. To achieve that, they are generally battery-powered, and are equipped with a microprocessor, an internal memory for data storage, and one or more sensors.

Such data logger include for example the data logger Pirani developed by the applicant. It could also include data loggers such as IP68 also developed by the applicant.

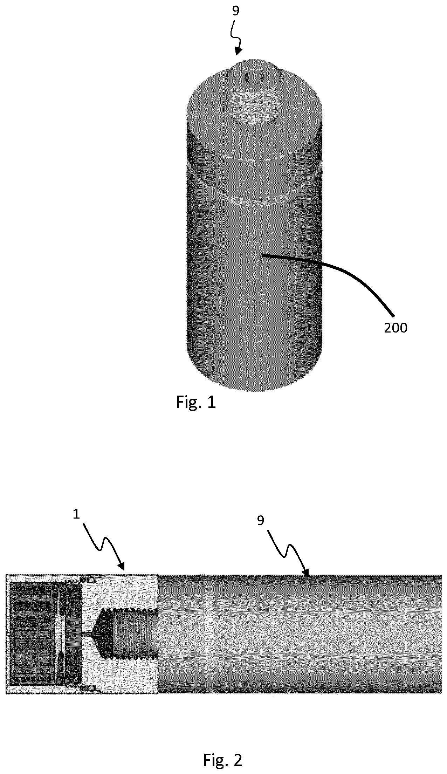

As visible in data logger 9 illustrated in figure 1, all the electronic components such as the microprocessor, which can be a part of a processing unit, are generally incorporated in a main body 200. Such main body can for example comprise a base surmonted by a cover. This main body can be watertight.

Data loggers can also comprise one or more probes. Those probes can be of different types, as for example rigid, collapsible or flexible, mainly depending on the context of use of the data logger.

These data loggers record and monitor environmental parameters, providing traceability and ensuring precise control of the sterilization process.

In a sterilization process, the data logger operates by measuring the heating of a wire through which current flows, with the heating being influenced by the level of vacuum. However, hydrogen peroxide decomposes over time into water and oxygen, a reaction that generates strong oxidative stress. Thee oxidative property of hydrogen peroxide poses a significant challenge, as it can damage the sensors and associated components within the data logger. Over time, this degradation leads to inaccurate measurements, reduced reliability, and potential failure of the data logger in environments where sterilization is critical.

There is therefore a need to provide a solution to protect such data logger from oxidation from hydrogen peroxide, or at least to reduce the effect of the hydrogen peroxide on it.

### Summary of the invention

The aim of the solution presented below is to provide a solution to at least one of the problem listed above.

To this end, the invention is related to an oxidation protection device for a data logger configured to protect said data logger when in contact with an oxidizing fluid, said protection device comprising:
- an external casing composed of a base and a cover defining a hollow interior space, said cover having a top wall provided with an opening so as to allow said oxidizing fluid to enter said hollow interior space for said oxidizing fluid to enter the protection device before reaching the data logger;
- catalytic means positioned within said hollow interior space and comprising a catalytic chamber facing said top wall, said catalytic means being configured to catalyze an oxidation reaction of said oxidizing fluid arriving through said opening and circulating within said catalytic chamber,
said catalytic means comprising a removable plate in the form of a solid disc in which a labyrinth is formed, said labyrinth being positioned into the hollow interior space facing said top wall, said labyrinth comprising an entry to allow said oxidizing fluid arriving from said opening to enter said labyrinth, and an exit orifice provided at an exit of said labyrinth to allow an oxidation reaction product and any remaining oxidizing fluid to exit from said labyrinth towards an exit of said device at the entry of said data logger.

According to one embodiment of the invention, the device includes a spring for biasing said removable plate against said top wall, said biasing spring being arranged within said hollow interior space and exerting a compressive force against said removable plate to press it against said top wall.

According to one embodiment of the invention, the device includes a deformable membrane positioned between said removable plate and said top wall to seal said circulation labyrinth, said membrane having a perforation formed in alignment with said opening of said top wall and in alignment with said entry of the labyrinth.

According to one embodiment of the invention, said removable plate is made from a composite material comprising between 25% and 80% catalytic material.

According to one embodiment of the invention, the composite material is a two-component epoxy resin or a two-component silicone rubber.

According to one embodiment of the invention, the catalytic material belongs to the group consisting of silver, manganese dioxide, lead, vanadium, chromium, ruthenium, platinum, iridium, gold, or titanium.

According to one embodiment of the invention, said removable plate has a shape substantially complementary to said hollow interior space.

According to one embodiment of the invention, said labyrinth is a unicursal spiral labyrinth.

According to one embodiment of the invention, said external casing has a substantially circular shape and is made from metal, plastic, and/or composite.
According to one embodiment of the invention, said cover has a lateral wall protruding from said top wall and carrying a threading configured to cooperate with a threading formed on a lateral wall of said base, said cover and said base being assembled by screwing.

According to one embodiment of the invention, said base has a threaded hole drilled from a bottom wall opposite said top wall and configured to cooperate with screwing means on said data logger, said threaded hole being connected to said exit orifice.

The invention also deals with an assembly comprising a data logger and an oxidation protection device according to any of preceding embodiments.

According to one embodiment of the invention, said oxidizing fluid is composed at least partially of hydrogen peroxide.

According to one embodiment of the invention, said data logger comprises screwing means configured to be screwed into threaded hole.

### List of figures

The invention, as well as its various advantages, will be more easily understood in the light of the following description of illustrative and non-limiting embodiments thereof, and of the appended drawings among which:
- Figure 1 is a schematical view of an example of a known data logger;
- Figure 2 is a schematical view of a data logger together with an oxidation protection device according to the invention;
- Figure 3 is an exploded cross-sectional view of an oxidation protection device according to a first embodiment of the invention;
- Figure 4 is a cross sectional view of an oxidation protection device according to the first embodiment of the invention;

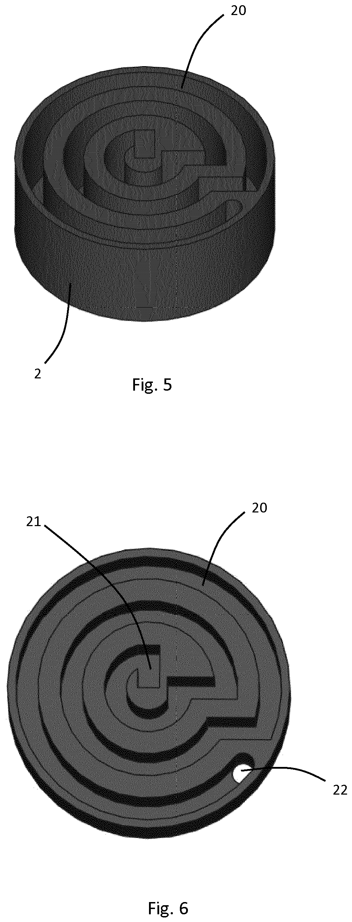

- Figure 5 is a perspective view of a part of an oxidation protection device according to the first embodiment of the invention;
- Figure 6 is a top view of a part of an oxidation protection device according to the first embodiment of the invention;
- Figure 7 is a perspective view of a cover according to the first embodiment of the invention;
- Figure 8 is a top view of a base according to the first embodiment of the invention, and
- Figure 9 is a top view of a part of an oxidation protection device according to a second embodiment of the invention.

### Detailed description of an embodiment of the invention

As detailed above, the aim of the solution object of the invention is to provide a solution to protect the data logger from oxidation.

The oxidation protection device is designed to protect the data logger 9 from contact with an oxidizing fluid by catalyzing its decomposition before it reaches the data logger.

In this embodiment, the oxidizing fluid is composed at least partially of hydrogen peroxide.

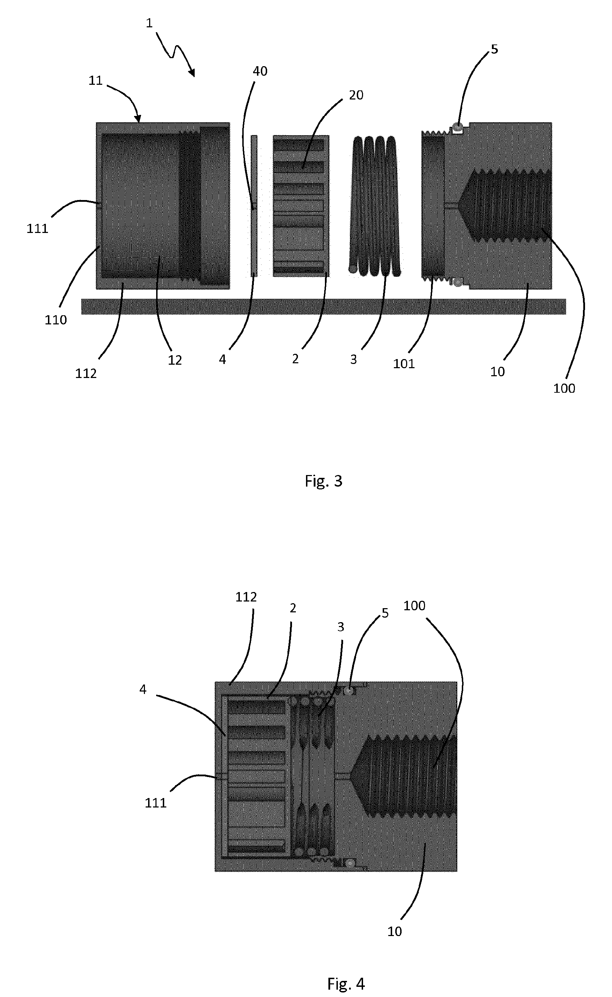

As depicted in figure 3, the oxidation protection device for a data logger 9 is configured to protect said data logger 9 when in contact with an oxidizing fluid, comprises:
- an external casing composed of a base 10 and a cover 11 defining a hollow interior space 12, said cover 11 having a top wall 110 provided with an opening 111 so as to allow said oxidizing fluid to enter said hollow interior space 12 for said oxidizing fluid to enter the protection device 1 before reaching the data logger 9;
- catalytic means positioned within said hollow interior space 12 and comprising a catalytic chamber facing said top wall 110, said catalytic means being configured to catalyze an oxidation reaction of said oxidizing fluid arriving through said opening 111 and circulating within said catalytic chamber.

As illustrated in figures, the cover 11 has a lateral wall 112 protruding from the top wall 110 and carrying a threading configured to cooperate with a threading formed on a lateral wall 101 of the base 10.

Thus, the cover 11 and the base 10 are assembled by screwing and define the hollow interior space 12.

As illustrated in this embodiment, an O-ring 5 is positioned in a groove formed on the lateral wall 101 and configured to cooperate with the lateral wall 112 in order to seal the hollow interior space 12 and avoid the entrance of oxidizing fluid through the thread.

The external casing formed by the cover 11 and the base 10 has a substantially circular shape and is made from metal, plastic, and/or composite.

The base 10 has a threaded hole 100 drilled from a bottom wall opposite the top wall 110 and configured to cooperate with screwing means on the data logger.

In other words, the data logger comprises screwing means configured to be screwed into the threaded hole 100.

The catalytic means, or catalyst, comprise a removable plate 2 in the form of a solid disc in which a labyrinth 20 is formed.

In this embodiment, the removable plate has a shape substantially complementary to said hollow interior space 12.

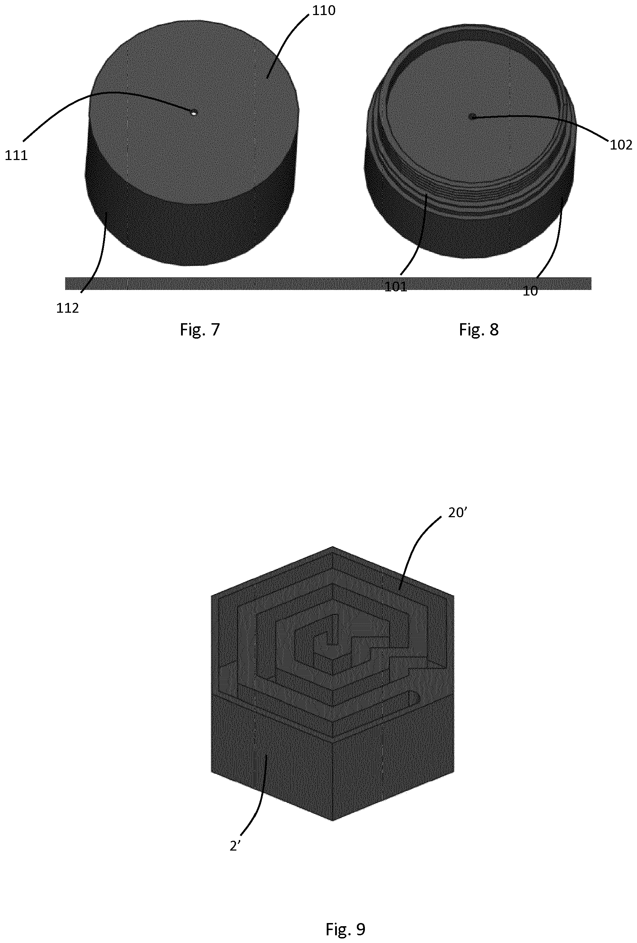

The solid disc can have a circular shape as illustrated in the first embodiment, or another polygonal shape, as for example the removable plate 2' illustrated in figure 9.

This labyrinth is positioned into the hollow interior space 12 facing the top wall 110. The labyrinth 20 comprises an entry 21, or starting point of the labyrinth,
to allow the oxidizing fluid arriving from the opening 111 to enter the labyrinth 20, and an exit orifice 22 provided at an exit of the labyrinth 20 to allow an oxidation reaction product and any remaining oxidizing fluid to exit from the labyrinth 20 towards an exit of the device at the entry of the data logger 9.

As visible in the figures, in this embodiment, the entry 21 is aligned with the opening 111. As for the orifice exit 22, it is connected to the threaded hole 100.

This design ensures that the oxidizing fluid interacts with the catalyst as it circulates through the labyrinth. The catalyst facilitates the decomposition of the oxidizing fluid into non-harmful byproducts, such as water and oxygen.

In this embodiment, the labyrinth 20 itself is designed as a unicursal spiral. This configuration forces the oxidizing fluid to follow a carefully controlled path, maximizing contact time with the catalytic material. The spiral design enhances decomposition efficiency.

The catalytic material can be chosen from the group consisting of silver, manganese dioxide, lead, vanadium, chromium, ruthenium, platinum, iridium, gold, or titanium.

The decomposition process prevents the oxidizing fluid from reaching the data logger 9. The exit orifice 22 leads to the entry of the data logger 9, ensuring that only decomposed byproducts can pass through, or only a few amount of oxidizing fluid. The protective device is thus an effective shield for maintaining the functionality and accuracy of the data logger in environments exposed to oxidizing agents.

The removable plate 2 is crafted from a composite material comprising between 25% and 80% catalytic material. This material composition ensures efficient decomposition of the oxidizing fluid as it travels through the intricately designed labyrinth 20.

The composite material may consist of durable substances such as a two-component epoxy resin or a two-component silicone rubber.

Concerning the catalytic material, in this embodiment, it belongs to the group consisting of silver, manganese dioxide, lead, vanadium, chromium, ruthenium, platinum, iridium, gold, or titanium.

Within the hollow interior space 12, a spring 3 is positioned to exert a compressive force on the removable plate 2, pressing it firmly against the top wall 110 of the cover 11. This design secures the plate in place, ensuring a precise and consistent alignment for effective interaction with the incoming oxidizing fluid.

Complementing this setup, a deformable membrane 4 is situated between the removable plate 2 and the top wall 110. The membrane acts as a seal for the labyrinth 20, protecting it from external contaminants and ensuring that the oxidizing fluid remains into the labyrinth.

When positioned, a perforation 40 in the membrane 4 corresponds with the opening 111 in the top wall and with the entry 21 of the labyrinth, allowing controlled entry of the oxidizing fluid into the labyrinth.

## Claims

1. An oxidation protection device (1) for a data logger (9) configured to protect said data logger (9) when in contact with an oxidizing fluid, said protection device comprising:
- an external casing composed of a base (10) and a cover (11) defining a hollow interior space (12), said cover (11) having a top wall (110) provided with an opening (111) so as to allow said oxidizing fluid to enter said hollow interior space (12) for said oxidizing fluid to enter the protection device (1) before reaching the data logger (9);
- catalytic means positioned within said hollow interior space (12) and comprising a catalytic chamber facing said top wall (110), said catalytic means being configured to catalyze an oxidation reaction of said oxidizing fluid arriving through said opening (111) and circulating within said catalytic chamber,
said catalytic means comprising a removable plate (2) in the form of a solid disc in which a labyrinth (20) is formed, said labyrinth being positioned into the hollow interior space (12) facing said top wall (110), said labyrinth (20) comprising an entry (21) to allow said oxidizing fluid arriving from said opening (111) to enter said labyrinth (20), and an exit orifice (22) provided at an exit of said labyrinth (20) to allow an oxidation reaction product and any remaining oxidizing fluid to exit from said labyrinth (20) towards an exit of said device at the entry of said data logger (9).

2. An oxidation protection device (1) according to claim 1, **characterized in that** it includes a spring (3) for biasing said removable plate (2) against said top wall (110), said biasing spring (3) being arranged within said hollow interior space (12) and exerting a compressive force against said removable plate (2) to press it against said top wall (110).

3. An oxidation protection device (1) according to claim 2, **characterized in that** it includes a deformable membrane (4) positioned between said removable plate (2) and said top wall (110) to seal said circulation labyrinth (20), said membrane (4) having a perforation (40) formed in alignment with said opening (111) of said top wall (110) and in alignment with said entry (21) of the labyrinth.

4. An oxidation protection device (1) according to one of claims 2 or 3, **characterized in that** said removable plate (4) is made from a composite material comprising between 25% and 80% catalytic material.

5. An oxidation protection device (1) according to claim 4, **characterized in that** the composite material is a two-component epoxy resin or a two-component silicone rubber.

6. An oxidation protection device (1) according to one of claims 4 or 5, **characterized in that** the catalytic material belongs to the group consisting of silver, manganese dioxide, lead, vanadium, chromium, ruthenium, platinum, iridium, gold, or titanium.

7. An oxidation protection device (1) according to one of claims 2 to 6, **characterized in that** said removable plate (2) has a shape substantially complementary to said hollow interior space (12).

8. An oxidation protection device (1) according to one of claims 2 to 7, **characterized in that** said labyrinth (20) is a unicursal spiral labyrinth.

9. An oxidation protection device (1) according to one of the preceding claims, **characterized in that** said external casing has a substantially circular shape and is made from metal, plastic, and/or composite.

10. An oxidation protection device (1) according to one of the preceding claims, **characterized in that** said cover (11) has a lateral wall (112) protruding from said top wall (110) and carrying a threading configured to cooperate with a threading formed on a lateral wall (101) of said base (10), said cover (11) and said base (10) being assembled by screwing.

11. An oxidation protection device (1) according to one of the preceding claims, **characterized in that** said base (10) has a threaded hole (100) drilled from a bottom wall opposite said top wall (110) and configured to cooperate with screwing means on said data logger (9), said threaded hole (100) being connected to said exit orifice (22).

12. An assembly comprising a data logger (9) and an oxidation protection device (1) according to one of claims 1 to 11.

13. An assembly according to the preceding claim, **characterized in that** said oxidizing fluid is composed at least partially of hydrogen peroxide.

14. An assembly according to the preceding claim, **characterized in that** said data logger (9) comprises screwing means configured to be screwed into threaded hole (100).
